# EUROPEAN PATENT APPLICATION

(11) **EP 1 758 006 A2**
(43) Date of publication of application: **28.02.2007**
(21) Application number: 06254247.7
(22) Date of filing: 12.08.2006
(51) Int. Cl.: G05D 7/00

(54) **Metering valve arrangement**

(30) Priority: 24.08.2005 GB 0517299
(71) Applicant: Goodrich Control Systems Limited, Solihull, West Midlands B90 4LA (GB)
(72) Inventor: Bickley, Daniel James, Solihull, West Midlands B91 3JH (GB)
(74) Representative: Bailey, Richard Alan

(57) **Abstract**

A metering valve arrangement comprises a spool 14 movable within a bore 12, the spool 14 and bore 12 together defining first and second control chambers 22, 32 the first control chamber 22 being supplied, in use, with fluid at a substantially fixed pressure, and a control valve arrangement 36 controlling the fluid pressure applied to the second control chamber 32, the control valve arrangement 36 comprising at least one solenoid operated three port valve 38, 56.

## Description

This invention relates to a metering valve arrangement for use in controlling the supply of fuel to a gas turbine engine. The invention also relates to a control valve arrangement for use in the metering valve arrangement.

A typical metering valve arrangement is illustrated, for example, in US 6813 876 and comprises a spool movable within a bore to vary the effective aperture size of a metering orifice and thereby control the rate at which fuel is supplied from the outlet of the metering valve. A pressure drop and spill valve is arranged to maintain a substantially constant pressure drop across the inlet and outlet of the metering valve during normal operation thereof.

The position occupied by the spool is controlled by controlling the relative fluid pressures within chambers located at each end of the spool, the position occupied by the spool being sensed by a suitable position sensor, for example a linear variable differential transformer. A flapper valve driven by a torque motor is used to control the supply of fluid to the said chambers, and hence to control the pressures therein. The flapper valve thus controls the position occupied by the spool.

As mentioned above, a conventional metering valve is controlled using a torque motor and an associated flapper valve that provide a proportional relationship between electrical input to the torque motor and the fluidic output from the flapper valve. Features in the flapper valve and torque motor are controlled finely to achieve the required characteristic between input and output of the torque motor and associated flapper valve. Such fine control increases the cost of components within the torque motor and flapper valve as well as increasing the setup costs.

US 6666014 describes an arrangement in which a solenoid operated valve is used to control the operation of a pressure raising valve to close the valve and thereby terminate a supply of fuel.

It is an object of the invention to provide a metering valve arrangement and an associated control valve arrangement of simple and convenient form.

According to the present invention there is provided a metering valve arrangement comprising a spool movable within a bore, the spool and bore together defining first and second control chambers, the first control chamber being supplied, in use, with fluid at a first pressure, and a control valve arrangement controlling the fluid pressure applied to the second control chamber, the control valve arrangement comprising at least one electrically operated valve controlling communication between the second control chamber a high pressure source and a low pressure return, and a restricted return path communicating with the second control chamber.

As the control valve arrangement only controls the fluid pressure applied to one of the control chambers, it can be of relatively simple form. Further, the use of one or more simple electrically controlled two or three port valves provides a simple and convenient way of controlling the operation of the metering valve. The control valve arrangement may comprise two valves arranged in series, at least one of which may be a bistable valve.

The restricted return path may communicate directly with the low pressure return or, alternatively, may communicate with the low pressure return through the control arrangement.

The effective areas of the spool exposed to the fluid pressures within the first and second control chambers may be substantially equal. The fluid pressure applied to the first control chamber may be derived from a fluid potentiometer network. Alternatively, the effective area of the spool exposed to the fluid pressure within the first chamber may be smaller than that exposed to the fluid pressure within the second chamber, and the first chamber may be arranged to be supplied with fluid at high pressure.

The invention also relates to a control valve arrangement for use in a metering valve arrangement of this type, the control valve arrangement comprising at least one electrically actuated three port valve.

According to another aspect of the invention there is provided a method of controlling the operation of a metering valve arrangement as described hereinbefore comprising pulsing the valve to control the fluid pressure applied to the second control chamber to hold the spool at substantially a desired position.

A rapid reduction in pressure applied to the second control chamber may be achieved by pulsing the valve rapidly.

The invention will further be described, by way of example only, with reference to the accompanying drawings, in which:
Figure 1 is a diagrammatic view of a metering valve arrangement in accordance with one embodiment of the invention;
Figures 2 to 4 are views similar to Figure 1 illustrating alternative embodiments; and
Figures 5 and 6 are graphs illustrating the operation of an arrangement in accordance with the invention.

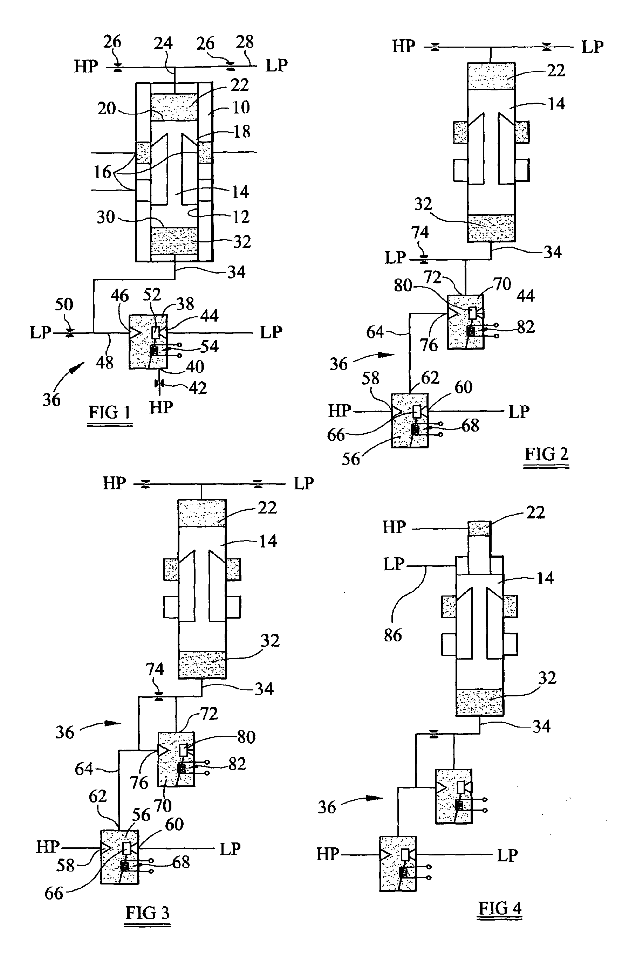

The metering valve arrangement illustrated, diagrammatically, in Figure 1 comprises a metering valve housing 10 defining a cylindrical bore 12 within which a spool member 14 is slidable. The housing 10 is provided with ports 16 to allow the connection of the metering valve to a source of fuel under pressure and to a gas turbine engine.

As illustrated, the spool 14 is provided with lands 18 which can obscure or partially obscure some of the ports 16, depending upon the axial position occupied by the spool 14, and thereby control the rate at which fuel is supplied through the metering valve. The operation of the metering valve is well known and will not be described in further detail other than as necessary to describe the operation of the invention.

A first end surface 20 of the spool 14 is exposed to the fluid pressure within a first control chamber 22. The first control chamber 22 communicates through a passage 24 with a fluid potentiometer network defined by a pair of restrictions 26 provided in a flow passage 28 interconnecting a source of fluid under high pressure and a low pressure return. It will be appreciated, therefore, that the first chamber 22 is held at an intermediate fluid pressure, the fluid pressure being determined, in part, by the relative sizes of the restrictions 26. As the first control chamber 22 is held at an intermediate fluid pressure, it will be appreciated that the spool 14 experiences a continuous force urging the spool 14 in the downward direction in the orientation illustrated.

A second end surface 30 of the spool 14 is exposed to the fluid pressure within a second control chamber 32. The design of the spool 14 and housing 10 is such that the effective surface area of the second surface 30 is substantially equal to that of the first surface 20. The second control chamber 32 communicates through a passage 34 with a control valve arrangement 36 operable to control the fluid pressure within the second chamber 32. It will be appreciated that the fluid pressure within the second control chamber 32 applies an upwardly directed force to the spool 14. Where the fluid pressure within the second control chamber 32 exceeds that within the first control chamber, the net force experienced by the spool 14 urges the spool 14 in an upward direction, opening the valve.

The control valve arrangement 36 comprises an electrically actuated, for example solenoid actuated, three port valve 38 having a first, common port 40 connected through a restriction 42 to a supply of fluid under high pressure. A second port 44 is connected to a low pressure fluid return. A third port 46 of the valve 38 is connected to a passage 48 connected to the second control chamber 32 through the passage 34. The passage 34 communicates, through a restriction 50, with the low pressure return, and so forms a restricted return path connecting the second control chamber 32 to the low pressure return.

The valve 3 8 includes a valve element 52 movable between a first position in which it closes the third port 46, allowing communication between the first port 40 and the second port 44, and a second position in which it closes the second port 44, allowing communication between the first port 40 and the third port 46. The valve element 52 is conveniently spring biassed, or otherwise biassed, towards its first position, and is movable to its second position upon energisation of an armature 54.

In use, with the armature 54 energised so that the valve 38 occupies the second position (as illustrated), it will be appreciated that fluid under high pressure is supplied through the restriction 42 to the first port 40, and through the valve 38 to the third port 46 from where it is supplied to the second control chamber 32, thus the second control chamber 32 is pressurised to a high level. A small quantity of fluid will pass through the restriction 50 to the low pressure return, but the relative sizes of the restrictions 50 and 42 are arranged to ensure that, in this mode of operation of the control valve arrangement 36, the second control chamber 32 will attain a pressure significantly higher than that within the first control chamber 22 with the result that the spool 14 is urged upwardly, in the orientation illustrated, increasing the flow through the metering valve, against the action of the fluid pressure within the first control chamber, the movement of the spool 14 occurring sufficiently quickly to allow good control over the supply of fuel to the engine.

Control of movement of the spool 14 in a downward direction from the position illustrated is achieved by either de-energising the armature 54 such that the valve element 52 moves to its first position, or by repeatedly pulsing the armature 54 on and off. The velocity of the downward movement of the spool 14 when the valve element 52 occupies its first position is controlled by the size of the restriction 50 and the differential pressure between the high pressure supply and the low pressure return. This velocity is usually low relative to the maximum required downward velocity since it limits variation in fuel flow delivered to the engine when electrical power is interrupted. Repeated pulsing of the valve 38 is used to give a faster net downward velocity, as described below.

The metering valve arrangement is arranged such that in the event of an electrical failure to the armature 54, the spool 14 will move, relatively slowly, in the downward direction to gradually reduce the flow of fuel to the associated engine. In the event of an electrical failure, the valve element 52 will move under the action of the bias load applied thereto to close the third port 46, and fluid from the second control chamber 32 is able to escape to the low pressure return, at a relatively slow rate, through the restriction 50. The fluid pressure within the second control chamber 32 thus falls and the spool 14 moves in a downward direction at a fixed rate controlled by the size of the restriction 50.

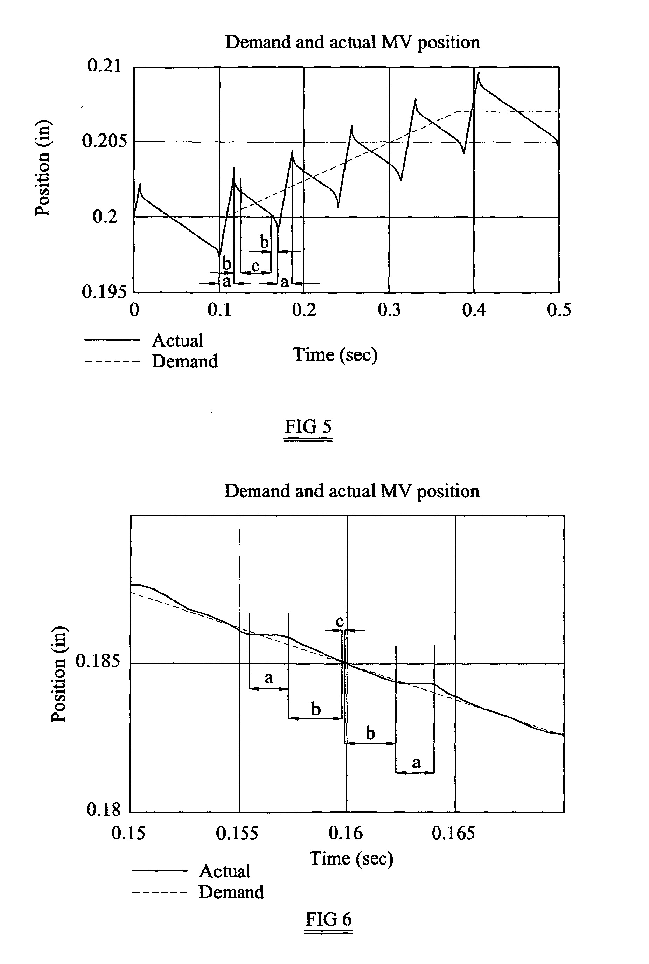

Figure 5 is a graph illustrating the position occupied by the spool 14 over a period of time during which it is desired to move the spool 14 in an upward direction, the broken line illustrating the desired spool position and the solid line illustrating the actual spool position. It will be seen that the spool 14 oscillates around the desired position, the spool 14 moving upwards, rapidly, for a short period of time a, when the valve member 52 occupies its second position, and moving downwards at a slower rate for a period of time c, when the valve member 52 occupies its first position. Each time the valve is switched there is a short period of time b, whilst the valve element is in transit, during which the second and third ports 44, 46 are both open at which time fuel is able to escape quickly from the second chamber 32. Each time the valve is switched, therefore, there is a short period of rapid downward movement of the spool 14.

As mentioned above, the restriction 50 limits the rate at which downward movement of the spool 14 occurs if the valve element 52 is simply held in its first position. To achieve a higher rate of movement, the valve is pulsed on and off rapidly the effect of which is illustrated in Figure 6. It should be noted that the scales, particularly the horizontal scale, of Figure 6 is magnified as compared to Figure 5. In Figure 6, the periods a are those during which the valve element occupies its second position and are so short as to only result in the downward movement being slowed, rather than in upwards movement, of the spool 14, the periods b are those when the valve element 52 is in transit and hence the spool 14 moving rapidly downwards and the periods c are those during which slower downward movement occurs at a velocity controlled, in part, by the restriction 50. In the illustrated arrangement, the rapid on-off pulsing results in the valve element 52 spending most time in transit, relatively little time being spent in either of its first and second positions.

The arrangement illustrated in Figure 2 is similar to that of Figure 1, but the control valve arrangement 36 including a single three port valve is replaced with a slightly more complex arrangement including a three port valve arranged in series with a two port valve. As illustrated, a three port valve 56 has a first port 58 connected to a source of fluid under high pressure and a second port 60 connected to a low pressure fluid return. The valve 56 further includes a common port 62 connected to a fluid line 64. A valve element 66 is provided, the valve element 66 being movable between a first position in which the first port 58 is closed, and communication is permitted between the second port 60 and the common port 62, and a second position in which the second port 60 is closed and communication is established between the first port 58 and the common port 62. The valve element 66 is movable under the control of an electrical actuator 68.

The valve 56 is conveniently of bi-stable form, movement of the valve element 66 from its first position to its second position, and return movement of the valve element 66 back to its first position both requiring energisation of the actuator 68, the valve element 66 being held or latched in one or other of its stable positions when the actuator is not energised.

The control valve arrangement further comprises a two port valve 70 which has a port 72 connected to the passage 34 which communicates with the second control chamber 32. The passage 34 further communicates, through a restriction 74, with a low pressure return to form a restricted return path.

As well as the port 72, the valve 70 includes a port 76 which communicates with the fluid line 64. A valve element 80 is provided within the valve 70, the valve element 80 being movable under the control of an electrically operable actuator 82 to determine whether the port 76 is closed or communicates with the port 72 at any given time. The valve element 80 is biassed towards the port 76, energisation of the actuator 82 lifting the valve element from this position.

In use, the operation of the valve 56 controls whether the fluid line 64 is connected to high or low pressure, and the valve 70 determines whether or not the fluid pressure applied to the line 64 is passed to the second control chamber 32. In use, with the valve elements 66, 80 in the positions illustrated, it will be appreciated that the second control chamber 32 is pressurised to a high pressure, urging the spool 14 in the upward direction in the orientation illustrated. When it is desired to move the spool 14 in a downward direction, the valve 56 is switched so as to break the communication between the first port 58 and the common port 62 and instead to establish communication between the second port 60 and the common port 62. It will be appreciated that this action allows the fluid pressure within the second control chamber 32 to fall rapidly and therefore allows rapid movement of the spool 14 in the downward direction. Upward movement of the spool 14 is achieved by, again, switching the valve 56 so as to break the communication between the second port 60 and the common port 62 and instead establish communication between the first port 58 and the common port 62.

The spool 14 can thus be maintained around the desired position either by repeated switching of a the valve 56 between its two stable states or by repeated switching of the valve 70 with valve 56 held in the position illustrated.

In the event of an electrical failure or interruption, regardless as to the position occupied by the valve 56, the valve member 80 of the valve 70 will be urged, by the biassing load applied thereto, to close the first port 76 thus isolating the second chamber 32 from the fluid pressure within the line 64. The fluid pressure within the second control chamber 32 will then fall, relatively slowly, due to fluid escaping through the restriction 74 to the low pressure return. Consequently, the spool 14 will move downwardly at a fixed rate controlled by the size of the restriction 74.

It will be appreciated that, as mentioned hereinbefore, the valve 56 may be a bi-stable device. However, it could be a mono-stable device biassed towards one or other of its extreme positions. The control valve 70 rather than taking the form of a bi-stable device is a mono-stable arrangement, in order to achieve the relatively slow downward movement of the spool 14 in the event of a power interruption or failure.

Figure 3 illustrates an arrangement which, structurally, is very similar to that of Figure 2. However, instead of communicating through the restriction 74 to a low pressure return, the second control chamber 32 communicates through the restriction 74 with the line 64. Part of the line 64 and the valve 56 therefore form part of the restricted return path. Further, in this arrangement, the control valve 56 is a mono-stable device arranged such that, in the event of a power supply interruption or failure, the valve element 66 will move to close the communication between the first port 58 and the common port 62, establishing communication between the second port 60 and the common port 62. In normal use of the embodiment illustrated in Figure 3, operation is substantially as described hereinbefore with reference to Figure 2. In the event of a power supply interruption, the valve element 66 of the valve 56 will move to break communication between the first port 58 and the common port 62, instead establishing communication between the second port 60 and the common port 62. The valve element 80 of the valve 70 will move to break communication between the port 76 and the port 72. In this condition, the second control chamber 32 communicates through the restricted return path including the restriction 74 and the line 64 with the common port 62 of the valve 56 and through the valve 56 with the low pressure return. It will be appreciated, again, that in these conditions the spool 14 moves, relatively slowly, in a downward direction.

The arrangement of Figure 4 is similar to that of Figure 3 but instead of providing a first end surface 20 of the spool 14 of substantially the same effective area as the second end surface 30 presented to the chamber 32, the bore 12 and spool 14 are of stepped cylindrical form, such that the effective area of the first end surface 20 exposed to the fluid pressure within the first control chamber 22 is substantially smaller than that of the second end surface 30. As the effective area of the spool 14 exposed to the fluid pressure within the first control chamber 22 is smaller than in the arrangements described hereinbefore, the first control chamber 22 can be supplied with fluid under high pressure without the necessity of providing a fluid potentiometer arrangement.

The provision of a spool 14 of stepped form results in the formation of an additional, annular chamber 84 which communicates through a suitable line 86 with a low pressure return in order to provide a drain path for any fluid that may leak past the seals (not shown) associated with the spool 14 to the chamber 84.

It will be appreciated that the modification illustrated in Figure 4 could be applied to the arrangements of Figure 1 or Figure 2.

The valves used in the control valve arrangement 36 could take a range of forms. Some suitable forms of valve are described in WO 02/04851, the content of which is incorporated herein by reference. It will be appreciated, however, that a number of other designs of valve, both mono-stable devices and bi-stable devices could be used without departing from the scope of the invention.

## Claims

1. A metering valve arrangement comprising a spool (14) movable within a bore (12), the spool (14) and bore (12) together defining first and second control chambers (22, 32), the first control chamber (22) being supplied, in use, with fluid at a first pressure, and a control valve arrangement (36) controlling the fluid pressure applied to the second control chamber (32), the control valve arrangement (36) being **characterised by** at least one electrically operated valve (38, 56, 70) controlling communication between the second control chamber (32), a high pressure source and a low pressure return, and a restricted return path communicating with the second control chamber (32).

2. An arrangement according to Claim 1, wherein the control valve arrangement (36) comprises two valves (56, 70) arranged in series.

3. An arrangement according to Claim 2, wherein at least one of the valves is a bi-stable valve (56).

4. An arrangement according to Claim 2 or Claim 3, wherein at least one of the valves is a mono-stable valve.

5. An arrangement according to any of the preceding claims, wherein the restricted return path communicates, constantly, with the low pressure return.

6. An arrangement according to any of the preceding claims, wherein the valve (38, 56, 70) is arranged, in use, to be pulsed between its operative positions

7. An arrangement according to any of the preceding claims, wherein the effective areas of the spool (14) exposed to the fluid pressures within the first and second control chambers (22, 32) are substantially equal.

8. An arrangement according to Claim 7, wherein the fluid pressure applied to the first control chamber (22) is derived from a fluid potentiometer network (24, 26, 28).

9. An arrangement according to any of Claims 1 to 6, wherein the effective area of the spool (14) exposed to the fluid pressure within the first chamber (22) is smaller than that exposed to the fluid pressure within the second chamber (32), and the first chamber (22) is arranged to be supplied with fluid at high pressure.

10. A control valve arrangement adapted for use in a metering valve arrangement (36) as claimed in any of the preceding claims, the control valve arrangement (36) comprising at least one solenoid actuated three port valve (38, 56).

11. A method of operating a metering valve arrangement as claimed in any of Claims 1 to 9, comprising pulsing the valve (38, 70) to control the fluid pressure applied to the second control chamber (32).

12. A method according to Claim 11, wherein a rapid reduction in pressure applied to the second control chamber (32) is achieved by rapidly pulsing the valve (38, 70).
